(19) Europäisches Patentamt
European Patent Office
Office européen des brevets

(11) Publication number: **0 387 566 A2**

(12) **EUROPEAN PATENT APPLICATION**

(21) Application number: **90103536.0**

(22) Date of filing: **23.02.90**

(51) Int. Cl.$^5$: **C08J 5/04, B29B 15/10, //C08L79:08**

(30) Priority: **08.03.89 US 320677**

(43) Date of publication of application: **19.09.90 Bulletin 90/38**

(84) Designated Contracting States: **DE FR GB IT SE**

(71) Applicant: **GENERAL ELECTRIC COMPANY**
**1 River Road**
**Schenectady New York 12305(US)**

(72) Inventor: **Minnick, Michael G.**
**1295 Stewart Lane**
**Coshocton, Ohio 43812(US)**
Inventor: **Guard, Peter S.**
**4323 209th Avenue N.E.**
**Redmond, Washington 98052(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) **Melt impregnation formation of thermoformable thermoplastic/knitted glass cloth composites.**

(57) Disclosed is a method for making thermoformable glass fiber-reinforced composite suitable for thermoforming into an aircraft interior part where deep draws are required. The method comprises placing within a press a sheet of a polyetherimide and a sheet of knitted glass cloth. The sheet within the press then is subjected to sufficient pressure and temperature to melt impregnate the knitted glass cloth with a polyetherimide to form a thermoformable composite thereof.

EP 0 387 566 A2

# MELT IMPREGNATION FORMATION OF THERMOFORMABLE THERMOPLASTIC/KNITTED GLASS CLOTH COMPOSITES

## Background of the Invention

The present invention is directed to the preparation of thermoplastic/knitted glass cloth composites and more particularly to the preparation of thermoformable such composites by melt impregnation techniques.

Opportunities for engineered thermoplastics in aircraft interiors has increased with the advent of new federal regulations governing interior components flammability. Additionally, cost pressures have furthered the development of plastics applications as an effective means of reducing manufacturing costs and weight penalties associated with fabricated metal parts. For example, the principal function of the passenger compartment sidewall is to provide a decorative lining between the passenger cabin floor and the underside of the overhead stowage system. The sidewall also contains the inner protective cover of the passenger cabin windows and the means to control the admission of exterior light into the passenger cabin The sidewall contains the means to allow cabin air to be exhausted into the lower lobe of the airplane, both in the normal operation of the air conditioning system and in the event of decompression.

For a new airplane interior sidewall to be readily accepted in the market, its architecture and function must be compatible with existing airplane structure for retrofit purposes. Additionally, the sidewall candidate should at least maintain, if not improve, the durability and maintainability of the components manufactured therefrom within a weight no greater, and preferably less, than that of existing designs. The same is true of other functions which should be at least maintained, if not improved. Such functions include, for example, menas to control exterior light emission, ease of installation and removal of the sidewall to allow access to the airplane structure which is outboard of it, acoustic transmission loss considerations of the sidewall, especially in the 250-1,000 Hz frequency range, and the like. Additionally, the successful wall system would have to have an installation means suitable for the load factors placed on the sidewalls during aircraft operation, e.g. 9 Gs forward, 4.5 Gs sideways, and 6 Gs up/down. Of course, though the sidewall panels should remain in place during aircraft use, installation architecture should be such that the panels can be easily removed for aircraft maintenance, cleaning, replacement, or the like. Additionally, the sidewall panel system should be capable of accepting a variety of decorative effects and reconfigurations as determined by each individual airline.

Temperature considerations require the sidewall to tolerate ambient temperatures between -40° F and + 160° F, relative humidities of between 0 and 100 percent, and pressures of between about 2.5 and 16 psia without degradation. Materials used in the sidewall system, including coverings, should meet the flammability requirements of FAR (Federal Aviation Regulation) 25.853(a) and (a-1). This regulation requires the material to be self-extinguishing when tested vertically (60 seconds exposure to a Bunsen burner flame) in accordance with FAR 25 Appendix F, and have an average total heat release of two minutes of not greater than 65 kw-mins/meters$^2$ and an average peak heat release rate of not greater than 65 kg/meters$^2$ when tested to the criteria of FAR 25 Appendix F, Part IV. Additionally, individual airlines will have their own smoke and gas release limits, flame spread index, and burn-through requirements.

Heretofore, reinforced composites utilizing phenolic resins have been used in the fabrication of aircraft interior sidewalls. Phenolic resins have been used because of their high heat resistance, rigidity, adhesion to reinforcements, and solvent resistance. Notwithstanding the efficacy of reinforced phenolic resin systems, the aircraft industry still is seeking a more flame-resistant thermoplastic composite material which would offer weight savings and processing advantages over the presently used phenolic glass cloth prepregs.

## Broad Statement of the Invention

The present invention is directed to a method for making a thermoformable glass fiber-reinforced composite suitable for thermoforming into an aircraft interior part, e.g. three-dimensional part. The method comprises placing within a press a sheet of a polyetherimide and a sheet of knitted glass cloth. The sheets within the press then are subjected to sufficient pressure and temperature to melt impregnate the knitted glass cloth with the polyetherimide to form the thermoformable composite thereof. The polyetherimide is of a specific structure that will be detailed hereinbelow.

Advantages of the present invention include the manufacture of a reinforced composite that at least meets current aircraft industry requirements for use in manufacturing aircraft interior parts Another advantage is the weight savings offered by the inventive composite. These and other advantages will be

readily apparent to those skilled in the art based upon the disclosure contained herein.

Detailed Description of the Invention

Glass cloth composites conventionally have been produced by dipping woven glass cloth fabric in solutions containing a thermoset (or solubilized thermoplastic) resin and "B staging" by oven drying the impregnated fabric in a high temperature oven. This operation can be conducted continuously. Laminates subsequently are formed by "laying up" or collating one or more plies of the so-called "prepregs" and consolidating the plies with high temperature and pressure being applied. Many styles of woven fabrics lend themselves to this type of process, however, the more thermoformable continuous glass reinforcements (non-woven mats and knitted fabrics) cannot be as readily processed by this technique due to their relatively poor handleability characteristics. Processes have been developed for non-woven glass mat composites by melt impregnating with thermoplastic films. Although readily thermoformable, glass mat composites generally have lower glass reinforcement than glass cloth composites, and require more material to achieve a defined panel stiffness.

The composites of the present invention are formed by conventional melt impregnation techniques wherein the polyetherimide resin is melt impregnated into knitted glass cloth. Knitted glass cloth offers the performance advantages of continuous glass cloth and the thermoforming advantages of non-woven glass mat. As the examples will demonstrate, other forms of continuous glass cloth reinforcement cannot be vacuum thermoformed into suitable aircraft interior part configurations without the reinforcement tearing due to the deep draw requirements dictated by certain part configurations.

The polyetherimides can be obtained by any of the methods well known to those skilled in the art including the reaction of any aromatic bis(ether anhydrides) of the formula:

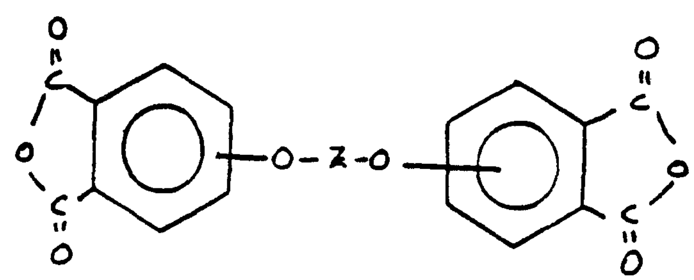

where Z is defined below, with an organic diamine of the formula:

$H_2N-R-NH_2$

where R also will be defined below.

Aromatic bis(ether anhydride)s of the above formula include, for example 2,2-bis[4-(2,3-dicarboxyphenoxy)-phenyl-propane dianhydride; 4,4′-bis(2,3-dicarboxyphenoxy)diphenyl ether dianhydride; 1,3-bis-(2,3-dicarboxyphenoxy)benzene dianhydride; 4,4′-bis(2,3-dicarboxyphenoxy)diphenyl sulfide dianhydride; 1,4-bis(2,3-dicarboxyphenoxy)benzene dianhydride; 4,4′-bis(2,3-dicarboxyphenoxy)benzophenone dianhydride; 4,4′-bis(2,3-dicarboxyphenoxy)diphenyl sulfone dianhydride; 2,2-bis[4-(3,4-dicarboxyphenoxy)-phenyl] propane dianhydride; 4,4′bis(3,4-dicarboxyphenoxy)diphenyl ether dianhydride; 4,4′-bis(3,4-dicarboxyphenoxy)diphenyl sulfide dianhydride 1,3-bis(3,4-dicarboxyphenoxy)benzene dianhydride; 1,4-bis(3,4-dicarboxyphenoxy)benzene dianhydride 4,4′-bis(3,4-dicarboxyphenoxy)benzophenone dianhydride; 4-(2,3-dicarboxyphenoxy) 4′(3,4-dicarboxyphenoxy)diphenyl-2,2-propane dianhydride; and mixtures of such dianhydrides.

In addition, aromatic bis(ether anhydride)s also included by the above formula are shown by Koton, M.M.; Florinski, F.S.; Bessonov, M.I.; Rudakov, A.P. (Institute of Heteroorganic compounds, Academy of Sciences, U.S.S.R.), U.S.S.R. 257,010, Nov. 11, 1969, Appl. May 3, 1967. In addition, dianhydrides are shown by M.M. Koton, F.S. Florinski, Zh Org. Khin, 4(5), 774 (1968).

Organic diamines of the above formula include, for example, m-phenylenediamine, p-phenylenediamine, 4,4′-diaminodiphenylpropane, 4,4-′diaminodiphenylmethane, benzidine, 4,4′-diaminodiphenyl sulfide, 4,4′-diaminodiphenyl sulfone, 4,4′-diaminodiphenyl ether, 1,5diaminonaphthalene, 3,3′-dimethylbenzidine, 3,3′-dimethoxybenzidine, 2,4-bis(β amino-t-butyl)toluene, bis(p-β-amino-t-butylphenyl)ether, bis(p-β-methyl-o-aminopentyl)benzene, 1,3-diamino-4-isopropylbenzene, 1,2-bis(3-aminopropoxy)ethane, m-xylylenediamine, p-xylylenediamine, 2,4-diaminotoluene, 2,6-diaminotoluene, bis(4-aminocyclohexyl)methane, 3-methylheptamethylenediamine, 4,4-dimethylheptamethylenediamine, 2,11-dodecanediamine, 2,2-dimethylopropylenediamine, octamethylenediamine, 3-methoxyhexamethylenediamine, 2,5-dimethylhexamethylenediamine, 2,5-dimethylheptamethylenediamine, 3-methylheptamethylenediamine, 5-methylnonamethylenedediamine, 1,4-cyclohexanediamine, 1,12-octadecanediamine, bis(3-aminopropyl)sulfide, N-methyl-bis(3-aminopropyl)amine, hexamethylenediamine, hepatmethylenediamine, nonamethylenediamine, decamethylenediamine, bis(3-aminopropyl) tetramethyldisiloxane, bis(4-aminobutyl) tetramethyldisiloxane, and the like.

In general, the reactions can be advantageously carried out employing well-known solvents, e.g. o-dichlorobenzene, m-cresol/dianhydrides and the diamines, at temperatures of from about 100° to about 250° C. Alternatively, the polyetherimides can be prepared by melt of polymerization of any of the above dianhydrides with any of the above diamine compounds while heating the mixture of the ingredients at elevated temperatures with concurrent intermixing. Generally, melt polymerization temperatures between about 200° to 400° C and preferably 230° to 300° C can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mol percent) of diamine can be employed resulting in the production of polyetherimides having terminal amine groups. Generally, useful polyetherimides have an intrinsic viscosity greater than 0.2 deciliters per gram, preferably 0.35 to 0.60 or 0.7 deciliters per gram or even higher than measured in m-cresol at 25° C.

Included amont the many methods of making the polyetherimides are those disclosed in U.S. Pats. Nos. 3,847,867, Heath et al., 3,847,869, Williams, 3,850,885, Takekoshi et al., 3,852,242, White, and 3,855,178, etc. These disclosures are incorporated herein in their entirety by reference for the purpose of teaching, by way of illustration, general and specific methods for preparing polyetherimides suitable for the composites of this invention.

The polyetherimides themselves can be represented by the following formula:

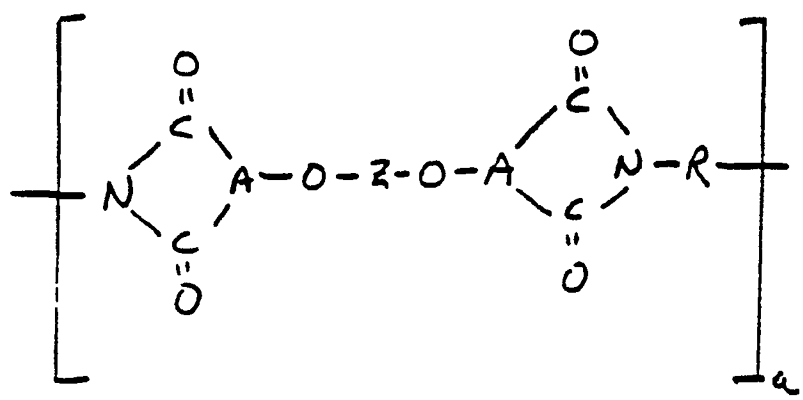

where a represents a whole number in excess of 1, e.g., 10 to 10,000 or more, the group

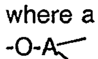

is selected from:

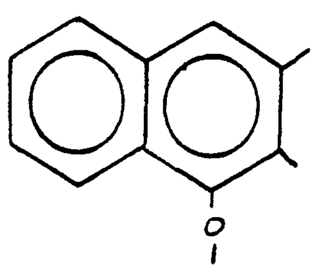

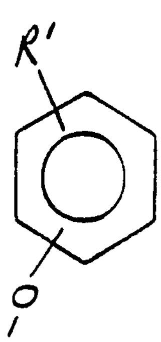

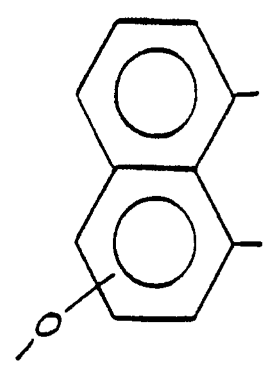

R′ being hydrogen, lower alkyl or lower alkoxy, preferably the polyetherimide includes the latter

-O-A<
group where R′ is hydrogen such that the polyetherimide is of the formula:

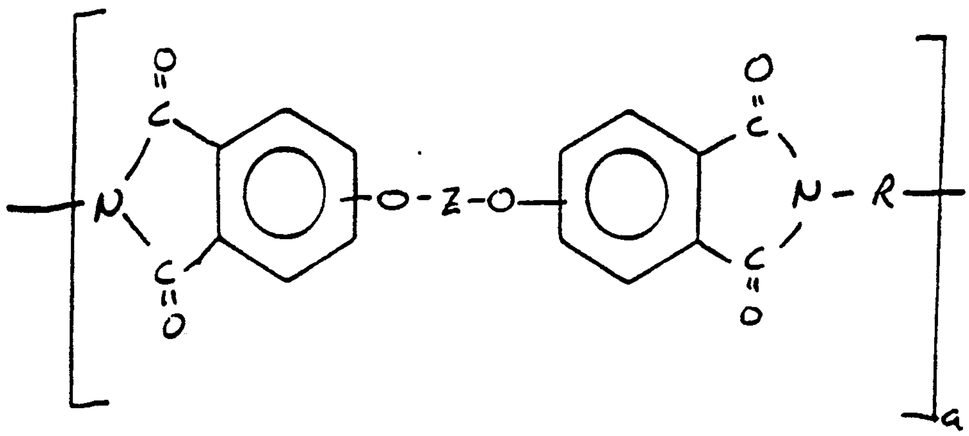

and the divalant bonds of the -O-Z-O radical are in the 3,3′; 3,4′; 4,3′ or the 4,4′ position; and Z is a member of the class consisting of (I)

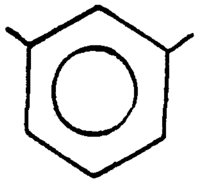

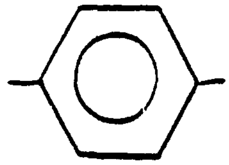

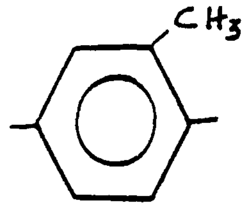

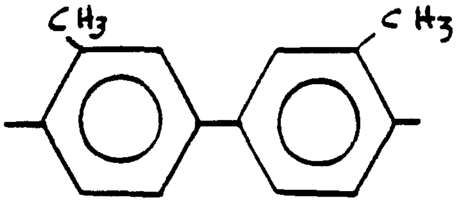

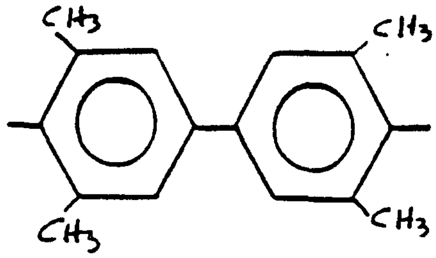

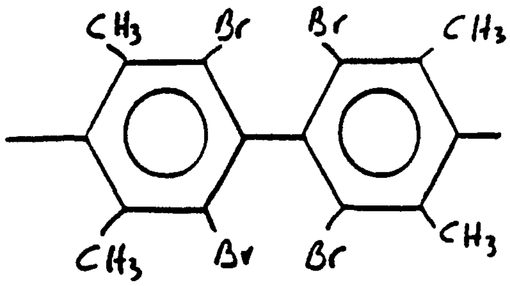

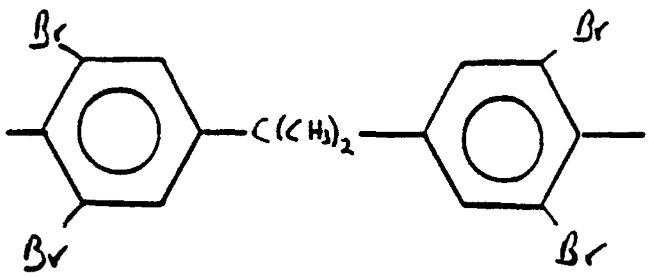

and (2) divalent organic radicals of the general formula:

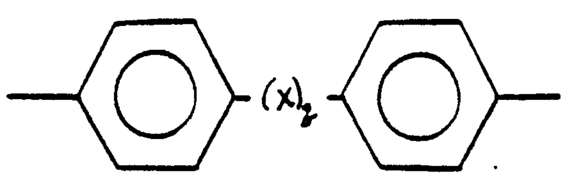

where X is a member selected from the class consisting of divalent radicals of the formulas,

$$-C_yH_{2y}-, -\overset{\overset{O}{\|}}{C}-, -\underset{\underset{O}{\|}}{\overset{\overset{O}{\|}}{S}}-, -O- \text{ and } -S-$$

where Q is 0 or 1, y is a whole number from 1 to 5, and R is a divalent organic radical selected from the class consisting of (1) aromatic hydrocarbon radicals having from 6-20 carbon atoms and halogenated derivatives thereof, (2) alkylene radicals and cycloalkylene radicals having from 2-20 carbon atoms, $C_{(2-8)}$ alkylene terminated polydiorganosiloxane, and (3) divalent radicals includes the formula

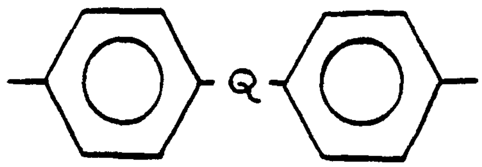

where Q is a member selected from the class consisting of

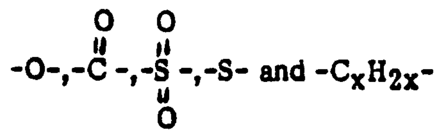

where x is a whole number from 1 to 5 inclusive. Particularly preferred polyetherimides for the purposes of the present invention include those where
-O-A<
and Z respectively are:

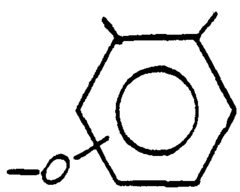

and

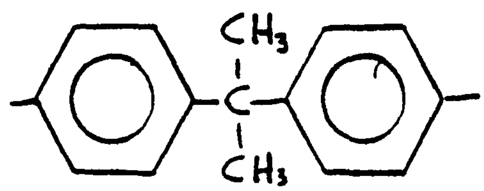

and R is selected from:

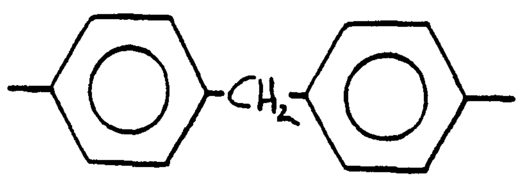

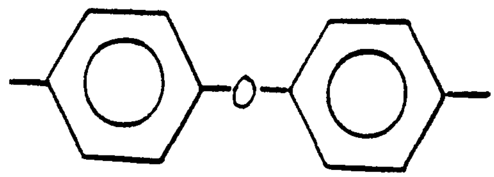

,

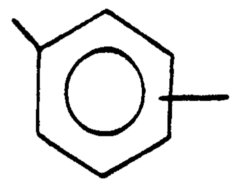

The polyetherimides where R is a metaphenylene are most preferred.

The polyetherimide resins may be admixed with a variety of other resins for achieving certain specific effects, if necessary, desirable, or convenient. These additional resins include, for example, polyamide resins, rubber modified vinyl aromatic polymers, organopolysiloxane-polycarbonate block copolymers, and the like.

In forming the composites of the present invention, the polyetherimide resin desirably is used in continuous film form, optionally using dissolved polyetherimide in solvent (e.g. 10% polyetherimide resin dissolved in methylene chloride solvent) as an adhesive for bonding the polyetherimide films to the knitted glass cloth placed in the press. Multiple layers, consecutive and alternating, can be laid up in the press. Suitable knitted glass cloth will contain from about 1.5 to 9.0 ounces per square yard. After the polyetherimide film/knitted glass cloth sheets are placed in the press, the press is closed and a pressure of between about 50 and 600 psi is applied. The press also is configured for applying heat to the press contents sufficient to soften the polyetherimide resin sufficiently so that it flows into and impregnates the one or more layers of knitted glass cloth housed within the press. Appropriate temperatures generally range from about 300° to 400° C with press times ranging from about 2 to 30 minutes. After sultable cool down, the press is opened and the composites are removed.

The thus-formed composites can be conventionally pressure or vacuum thermoformed for providing a variety of part configurations required of the aircraft industry. Of particular advantage is the ability of the inventive composites to withstand a deep draw while exhibiting substantially no fiber breakage. Other continuous glass cloth forms, however, exhibit fiber breakage as examples will demonstrate.

The following example shows how the present invention has been practiced, but should not be construed as limiting. In this application, all citations are expressly incorporated herein by reference.

## EXAMPLE

Composites were pressed utilizing several different glass cloths and ULTEM 1000 polyetherimide resin (General Electric Company, Plastics Group, Pittsfield, Massachusetts). One and two mil polyetherimide films were used to form three-ply composites of the following configuration commencing with the outside: 1 mil polyetherimide film, 2 mil polyetherimide film, glass cloth, 2 mil polyetherimide film, 1 mil polyetherimide film, 2 mil polyetherimide film, and glass cloth. This pattern was repeated from the central glass cloth layer to complete the other side of the three-ply composite configuration. The glass cloths that were tested included 2 Bar Rochelle Knit Cloth: 18 wales per inch, 20 courses per inch, 6.5 ounces/sq. yard (2 BRK Brand, Varinet Corp., Greenville, South Carolina); 120 style glass cloth; and 7718 style glass cloth. Adhesive (10% Ultem resin dissolved in methylene chloride) was used to bond the glass cloth to the polyetherimide films while laying up the layers in the press.

Pressing conditions included a pressure of 300 psi and a temperature of 400° C which was held for 10 minutes The cycle included a 20-25 minute heat-up to temperature, a 10 minute hold temperature, and a

25-30 minute cool down period.

Each of the composites then were pressure thermoformed into the shape of a flight recorder base. The part geometry called for a depth of draw of 0.5 in into a 4.75 in by 6 in depression. The draft angle on the sidewalls of this depression was 1/2°. The perimeter flange was 0.875 in wide with a small stiffening rib located in the outermost edge. The tool was constructed to shear any excess material which extends beyond this rib which prevented forming a complete part from the fabric material. Tool heating was achieved by electric cartridge heaters set at 390° F. Samples were heated in an adjacent tunnel oven using quartz elements. The oven controller temperature was set at 1200° F. The stamping pressure was 2,000-2,500 psi and the in mold dwell time was set at 30 seconds.

The following results were recorded:

TABLE 1

| Glass Type | % Resin | # Plies | Part Appearance | Fiber Breakage |
|---|---|---|---|---|
| 2BRK | 42 | 5 | Good | None |
| 120 | 39 | 12 | Poor | Extensive |
| 7781 | 38 | 6 | Fair | Same |

The foregoing results demonstrate that only the knitted glass cloth reinforcement configuration permitted the depth of draw to be achieved without fiber breakage being evidenced. Flammability heat release values are recorded below.

TABLE 2

| Glass Type | 2-Minute | Heat Release ($kw/m^2$) Peak | Smoke Peak |
|---|---|---|---|
| 2BRK | 2 | 12 | 2 |
| 120 | 0 | 7 | 1 |
| 7781 | 7 | 11 | 1 |
| Target | 65 | 65 | 50 |

This data demonstrates that the 2BRK knitted glass cloth/polyetherimide composite displays excellent flammability performance as required of FAR 25 Appendix F, Part IV. Such composite also out-performs the other composites with other types of reinforcement.

It should be noted that a 24 in x 60 in panel of three-ply 2BRK/Ultem polyetherimide resin composite was vacuum thermoformed into an aircraft sidewall panel in a forming trial. This trial confirmed the feasibility of vacuum thermoforming the composite material as well as pressure thermoforming as demonstrated above.

## Claims

1. Method for making a thermoformable glass fiber-reinforced composite suitable for transforming into an aircraft interior part, which comprises;
placing within a press a sheet of a polyetherimide and a sheet of knitted glass cloth,
subjecting said sheets to sufficient pressure and heating to melt impregnate said knitted glass cloth with said polyetherimide to form a thermoformable composite thereof.

2. The method of claim 1 wherein said polyetherimide of the formula:

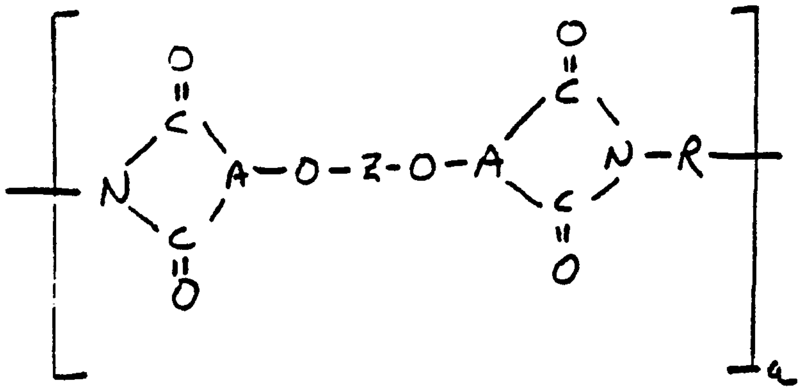

where A represents a whole number in excess of 1, the group
-O-A<
is selected from:

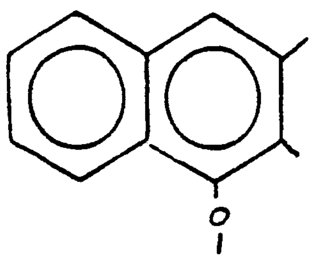 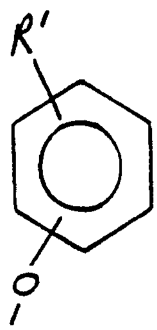 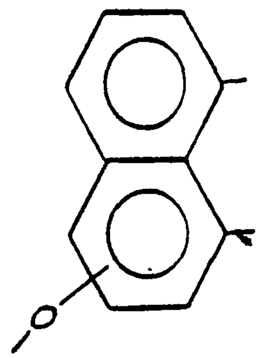

R′ being hydrogen, lower alkyl or lower alkoxy; and Z is a member of the class consisting of (1)

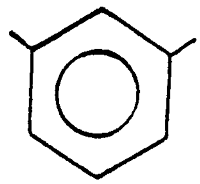

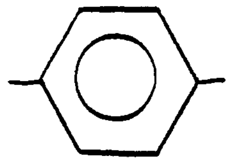

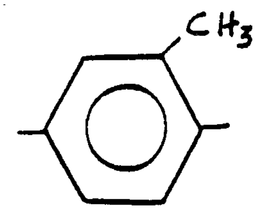

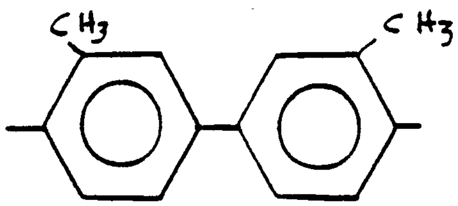

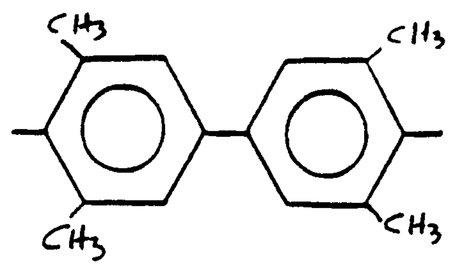

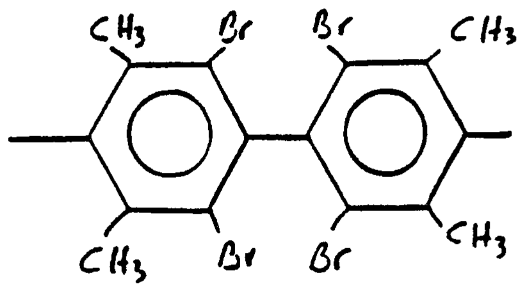

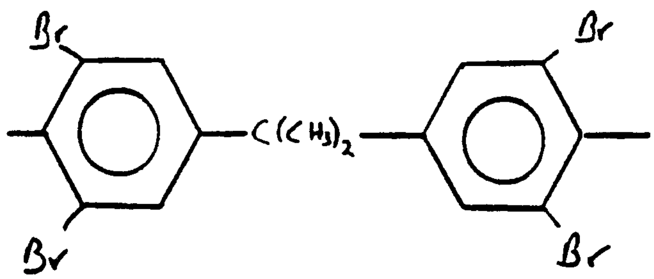

and (2) divalent organic radicals of the general formula:

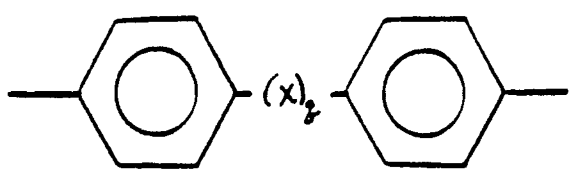

where X is a member selected from the class consisting of divalent radicals of the formulas,

$$-C_yH_{2y}-, \; -\overset{O}{\overset{\|}{C}}-, \; -\underset{\underset{O}{\|}}{\overset{O}{\overset{\|}{S}}}-, \; -O- \text{ and } -S-$$

where Q is 0 or 1, y is a whole number from 1 t 5, and R is a divalent organic radical selected from the class consisting of (1) aromatic hydrocarbon radicals having from 6-20 carbon atoms and halogenated derivatives thereof, (2) alkylene radicals and cycloalkylene radicals having from 2-20 carbon atoms, $C_{(2-8)}$ alkylene terminated polydiorganosiloxane, and (3) divalent radicals includes the formula

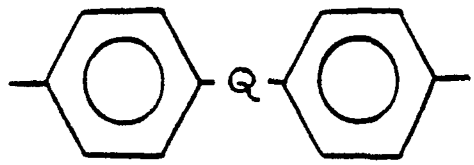

where Q is a member selected from the class consisting of

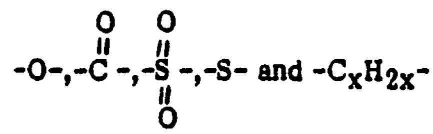

where x is a whole number from 1 to 5 inclusive.

3. The method of claim 2 wherein R is metaphenylene.

4. The method of claim 1 wherein said knitted glass cloth contains from about 1.5 to 9 ounces per square yard.

5. The method of claim 1 wherein said pressure ranges from about 50 to 600 psi and said temperature ranges from about 300° to 450° C.

6. The method of claim 4 wherein said pressure and heating are applied for a time ranging from about 2 to 30 minutes.

7. The method of claim 1 wherein said thermoformable composite is pressure-molded at elevated temperature to form a three-dimensional part.

8. The method of claim 1 wherein said thermoformable composite is vacuum molded at elevated temperature to form a three-dimensional part.

9. The method of claim 1 wherein multiple layers of said knitted glass cloth and said polyetherimide sheets are placed within said press.

10. The method of claim 1 wherein said sheets of polyetherimide comprise polyetherimide blended with an additional resin selected from the group consisting of polyamide resins, rubber modified vinyl aromatic polymers, organopolysiloxane-polycarbonate block copolymers, and mixtures thereof.